# FASCICULE DE BREVET EUROPEEN

(11) **EP 0 598 444 B1**
(45) Date de publication et mention de la délivrance du brevet: **22.07.1998**
(21) Numéro de dépôt: 93203146.1
(22) Date de dépôt: 11.11.1993
(51) Int. Cl.: H04N 7/24

(54) **Dispositif de traitement de signaux numériques préalablement codés par codage à longueur variable, et dispositif de traitement inverse de signaux ainsi traités**
Gerät zur Verarbeitung von kodierten digitalen Signalen variabler Länge und entsprechendes Gerät zur umgekehrten Verarbeitung
Apparatus for processing variable length coded digital signals, and corresponding apparatus for inverse processing of such signals

(30) Priorité: 18.11.1992 FR 9213855; 09.06.1993 FR 9306923
(43) Date de publication de la demande: 25.05.1994
(73) Titulaire: LABORATOIRES D'ELECTRONIQUE PHILIPS S.A.S., 94450 Limeil-Brévannes (FR); Philips Electronics N.V., 5621 BA Eindhoven (NL)
(72) Inventeur: Decotignie, Philippe, F-75008 Paris (FR); Jourdan, Sabine, F-75008 Paris (FR)
(74) Mandataire: Landousy, Christian

(56) Documents cités:
- EP-A- 0 442 548
- EP-A- 0 482 888
- EP-A- 0 501 699
- US-A- 5 111 292
- US-A- 5 126 857
- US-A- 5 144 425
- IEEE GLOBAL TELECOMMUNICATIONS CONFERENCE & EXHIBITION vol. 2/3 , 28 Novembre 1988 , HOLLYWOOD, FLORIDA, USA pages 1073 - 1079 XP79274 N. DOI ET AL. 'Adaptive DCT Coding for Home Digital VTR'

## Description

La présente invention concerne un dispositif de traitement, en vue d'une transmission, de signaux numériques qui correspondent à une séquence d'images organisée en blocs et ont été préalablement codés au moins en partie selon un codage à longueur variable. L'invention concerne également, lorsque des signaux numériques ont été ainsi traités puis transmis, un dispositif de traitement inverse de ces signaux, préalablement à leur décodage. Cette invention trouve une application par exemple dans le domaine de la transmission d'images animées, et notamment d'images de télévision.

Une norme dite "standard MPEG1" a été récemment adoptée par le groupe dit "Moving Picture Expert Group" (MPEG) de l'organisation de normalisation internationale I.S.O., pour le stockage d'images numériques animées. Ce standard définit un procédé de codage très efficace pour l'enregistrement d'images, non entrelacées, au format dit CIF (en anglais, Common Intermediate Format, 288 lignes x 352 points/ligne, 25 Hz, 1:1), mais également utilisable pour n'importe quel format d'image. Les méthodes de codage compatibles avec ledit standard permettent par exemple de comprimer un signal de télévision numérique de 160 Mbits/s à 5 Mbits/s, c'est-à-dire dans un rapport de 32/1, tout en préservant une qualité d'image très satisfaisante.

Des recherches essaient actuellement d'établir si ce standard peut être aussi utilisé pour la transmission d'images, et, par exemple et principalement, pour la transmission d'images de télévision. Malheureusement, la réponse semble pour le moment négative, du fait de la technique de codage à longueur variable utilisée par le standard MPEG1 (dite VLC, de l'anglais Variable Length Coding) et qui, associée à une transformation orthogonale préalable dite transformation cosinus discrète (notée DCT, de l'anglais Discrete Cosine Transform) et rappelée plus loin, permet de réduire la redondance spatiale de l'image. En effet, lorsqu'une erreur de transmission affecte un bit du flot de données numériques obtenu après le codage VLC, le décodeur reçoit un mot de code dont la longueur lui paraît différente de celle du code émis, qu'il ne connaît pas, et il n'a plus de repère temporel pour situer le début du mot de code suivant. Il en résulte que ce mot de code suivant est décodé de façon erronée, et de même pour les suivants : il y a propagation de l'erreur. Toutes les données décodées postérieures à l'emplacement de la première erreur sont fausses tant qu'un nouveau point de repère constitué par un mot de synchronisation n'est pas apparu. Comme ces derniers ne sont pas très nombreux (par exemple, un toutes les seize lignes d'image), même un très faible taux d'erreur conduit, par propagation de ces erreurs, à des défauts d'image inacceptables. Il existe, certes, des techniques de réduction du taux d'erreur à des valeurs très faibles, faisant appel à des codes correcteurs d'erreur très puissants, mais ces techniques augmentent la redondance des signaux, ce qui va à l'encontre de l'objectif justement poursuivi par MPEG1.

Une autre technique qui, au lieu de corriger la ou les erreurs, permet d'en limiter la propagation, est décrite dans le brevet des Etats-Unis d'Amérique USP-4907101. La solution proposée dans ce document consiste, en partant du fait que chaque bloc codé contient un nombre variable de mots de code de longueur différentes, à définir un paquet (ou boîte) de capacité déterminée égale à la longueur moyenne B des blocs entre deux mots de synchronisation successifs (c'est-à-dire dans une tranche d'image), et à transmettre au moins les premiers bits d'un bloc dans ce paquet. Si un bloc est plus court que ce paquet, il reste dans ce paquet de la place disponible. Si au contraire un bloc est plus long que le paquet, les bits excédentaires sont placés dans ces emplacements laissés disponibles par les blocs courts. Ainsi les paquets de bits transmis sont tous de longueur égale (sauf éventuellement le dernier, car le nombre total de bits d'une tranche n'est en général pas égal à un multiple du nombre de blocs) et, lors du décodage, le repérage des débuts des paquets de bits correspondant à chaque bloc au décodage ne pose plus aucun problème. Même si l'un ou plusieurs de ces blocs sont affectés d'erreurs de transmission, il ne peut plus y avoir de propagation de ces erreurs.

Malheureusement, cette technique n'est plus satisfaisante lorsqu'on veut l'appliquer à l'ensemble des différentes informations présentes dans un flot de données MPEG1. On verra en effet plus loin que certaines de ces informations ont, pour la qualité de l'image, une importance supérieure à celle des informations du bloc lui-même, et leur perte peut empêcher tout décodage à la réception. En outre, ces informations sont, pour la plupart d'entre elles, codées de manière différentielle, c'est-à-dire en utilisant ici une technique dite de prédiction à partir des informations similaires présentes dans les blocs précédents (par codage de la différence entre l'information précédente et l'information courante), et toute erreur dans un bloc finit par se propager du fait de cet appel aux informations précédentes.

Une affectation dynamique des différentes informations présentes dans un flot de données MPEG à une voie de haute priorité (HP) et à une voie de basse priorité (LP) est divulguée par le brevet US-A-5 111 292.

Un premier but de l'invention est donc de proposer un dispositif de traitement de signaux numériques qui sont de natures différentes et donc d'une importance variable justifiant de les ordonner selon une hiérarchie déterminée, dans lequel il soit possible de limiter la propagation des erreurs malgré l'existence du codage préalable à longueur variable de ces signaux, sans pour autant accroître le degré de redondance des informations contenues dans ces signaux.

A cet effet, l'invention concerne un dispositif tel que revendiqué par la revendication 1.

Le dispositif de traitement ainsi proposé parvient à concilier les situations contradictoires suivantes. D'une part la séquence des signaux ici concernés contient diverses informations dont certaines sont plus importantes que d'autres et sur lesquelles les erreurs relatives à leur identification ont des conséquences plus graves en matière de propagation d'erreurs de transmission, ce qui justifierait de les coder et traiter de façon plus soignée que les autres informations. Mais d'autre part un décodage de données est réalisé de façon d'autant plus sûre que le repérage des positions des diverses informations dans les signaux codés est plus simple. La solution technique ici retenue pour la transmission et/ou le stockage de données pouvant être ordonnées selon une hiérarchie déterminée assure la répartition de ces données, quelles que soient leurs proportions respectives souvent très variables, d'une manière effectivement très sûre en matière de restitution ultérieure des positions desdites informations.

La demande de brevet internationale WO-91/02430 décrit un système de traitement de signaux numériques codés à longueur variable dans lesquels sont présentes des informations d'importances distinctes. Il n'est cependant jamais envisagé, dans ce document, de traitement tirant le moindre parti de cette spécificité des informations. Simplement, en rompant l'appartenance initiale de ces données à des blocs de données successifs, elles sont, pour une série de blocs constituant alors des superblocs, regroupées par type de données avant d'appliquer à la nouvelle disposition ainsi constituée un principe de base identique à celui décrit dans le document USP-4907101. Le décodage ultérieur voit alors sa complexité sensiblement accrue sans qu'il en résulte, au cours de ce décodage, de garantie particulière quant à la sécurité de restitution de celles des ces données qui sont éventuellement prioritaires parce que plus importantes pour la qualité d'image finale (comme par exemple dans le cadre de l'application mentionnée plus haut).

Dans un exemple particulier de réalisation de ce dispositif, correspondant en fait au traitement d'un flot de données de type MPEG, les signaux à traiter sont de façon préférentielle constitués de M = 3 types de données à transmettre dans N = 2 voies distinctes HP et LP dites de haute et de basse priorité respectivement.

Dans une réalisation plus complète du dispositif tel que défini, il peut être prévu, selon l'invention, de considérer les restes éventuels des divisions réalisées pour les calculs de longueurs moyennes par bloc et pour chacune des deux voies HP et LP. Pour cela, le processus de redistribution mis en oeuvre dans le circuit de commande de redistribution de bits comprend également, pour l'ensemble des bits excédentaires regroupant ces restes, une étape similaire de calcul de longueur moyenne par bloc et par voie, ces longueurs moyennes étant elles aussi, fournies à la mémoire adressable.

Enfin la capacité de la mémoire adressable est de préférence au moins égale à celle de l'image ou du groupe d'images dans lequel, ou laquelle, doit être respectée ladite proportion globale déterminée, mais, dans une variante un peu plus simple permettant de réduire la taille mémoire, on peut reprendre comme valeurs de comptages celles déterminées pour l'image ou pour le groupe d'images précédent, la capacité de la mémoire pouvant alors n'être au moins égale qu'à la taille d'une tranche d'image.

Un autre but de l'invention est de proposer un dispositif de traitement qui, sur des signaux transmis après avoir subi, après codage à longueur variable, un traitement tel que celui qui vient d'être décrit, soit apte à effectuer le traitement inverse de celui-ci, préalablement à tout décodage à longueur variable.

A cet effet l'invention concerne un dispositif de traitement caractérisé en ce qu'il comprend :
(1) un circuit d'aiguillage desdits signaux transmis après cette réorganisation temporaire ;
(2) en parallèle sur N sorties dudit circuit d'aiguillage, N mémoires des données correspondant respectivement à chacune des N voies ;
(3) une mémoire intermédiaire de stockage des bits correspondant auxdits trous ;
(4) en parallèle sur chacune de ces (N+1) mémoires, M mémoires par type de donnée ;
(5) en sortie de chacune de ces M mémoires, un commutateur prévu pour sélectionner alternativement l'une des M sorties de ces M mémoires et ainsi reconstituer le flot initial des signaux numériques, M et N étant là aussi de préférence égaux à 3 et 2 respectivement.

Le dispositif de traitement ainsi proposé assure la réception des signaux numériques codés puis traités, puis leur aiguillage selon leur nature.

Les particularités et avantages de l'invention apparaîtront maintenant de façon plus détaillée dans la description qui suit et dans les dessins annexés, donnés à titre d'exemples non limitatifs et dans lesquels :
- la figure 1 illustre un balayage dit en zig-zag des coefficients issus de la transformation DCT appliquée à un bloc de 8 x 8 points d'image ;
- la figure 2 montre un exemple d'une séquence d'images différentes selon le mode de codage adopté pour chacune d'elles, ces codages étant le codage intra, noté I, le codage prédictif monodirectionnel, noté P, et le codage bidirectionnel, noté B ;
- la figure 3 montre un exemple de réalisation du dispositif de traitement selon l'invention, après codage et avant la transmission et/ou le stockage des signaux ainsi codés et traités ;
- la figure 4 montre un exemple de réalisation du dispositif de traitement inverse selon l'invention, après transmission et/ou stockage et avant décodage ;
- les figures 5 à 12 montrent le contenu des diverses mémoires présentes dans ce dispositif de traitement inverse.

Avant de décrire ces exemples de réalisation de dispositifs selon l'invention, il faut préciser qu'ils sont adaptés au traitement de données de type MPEG, et il paraît donc nécessaire de rappeler les caractéristiques d'un flot de données conforme à ce standard.

Une séquence numérique d'images animées comprend des informations relatives à la composante de luminance Y, ainsi que des informations relatives aux composantes de la chrominance, ou signaux de différence de couleur U et V. Les niveaux de gris, pour la luminance Y, et les niveaux de couleur, pour les signaux U et V, sont exprimés par des mots numériques de 8 bits regroupés en matrices. Selon le standard MPEG1, le format d'entrée est tel que la chrominance subit un sous-échantillonnage par quatre, par rapport à la luminance. De ce fait, on dispose de deux valeurs liées à la couleur (l'une pour U, l'autre pour V) pour quatre valeurs de luminance. Comme les matrices de mots sont divisées en blocs de 8 x 8 points d'image, quatre blocs adjacents de la matrice Y correspondent à un bloc de la matrice U et à un bloc de la matrice V, et ces six blocs, réunis, constituent un macrobloc (MB). Ces blocs et macroblocs sont les unités de subdivision d'image sur lesquelles est effectué le codage. Enfin, le regroupement d'une série de macroblocs constitue une tranche, et chaque image est composée d'un certain nombre de tranches, par exemple 36 dans l'exemple ici décrit.

Les images sont elles-mêmes de trois types, suivant le mode de codage qui leur est appliqué : les images I (de l'anglais "Intra frame coded picture"), ou images intra, qui sont codées indépendamment de toute autre image, les images P (de l'anglais "Predictive coded"), qui sont prédites par compensation de mouvement unidirectionnelle à partir d'images précédentes ou suivantes (de type I, ou de type P elles-mêmes), et les images B (de l'anglais "Bidirectionally motion compensated"), prédites par compensation de mouvement bidirectionnelle à partir d'une image antérieure et d'une image postérieure (elles-mêmes de type I et/ou P). Plusieurs images associées constituent un groupe d'images (ou GOP, de l'anglais Group Of Pictures), dans lequel les images sont placées, pour la transmission, dans l'ordre dans lequel le décodeur en aura besoin pour décoder les images I, P, B. La réorganisation de ces images dans leur ordre naturel n'intervient qu'après le décodage. Enfin, à leur tour, plusieurs groupes d'images constituent une séquence d'images.

Un point d'une image présente en général des similitudes avec son voisinage (c'est-à-dire avec les points d'image qui l'entourent). Cette redondance spatiale peut être réduite, en vue de la transmission et/ou du stockage prévus, en exploitant les propriétés statistiques des images dans le domaine fréquentiel, à l'aide des deux techniques désormais classiques citées plus haut, utilisées conjointement, à savoir la transformation cosinus discrète DCT et le codage à longueur variable VLC. La transformation DCT convertit chaque bloc de points d'image en un bloc de coefficients dont le premier, le coefficient direct (DC), représente la valeur moyenne des niveaux de gris sur l'ensemble du bloc et dont les autres, les coefficients alternatifs (AC), représentent successivement les différentes fréquences d'image croissantes présentes dans le bloc. Ces coefficients sont quantifiés, avec un pas de quantification qui conditionnera au décodage la précision de leur reconstitution (les hautes fréquences sont moins perceptibles par l'oeil humain, ce qui autorise un pas de quantification plus grand), puis lus selon un balayage déterminé, en général un balayage dit en zig-zag.

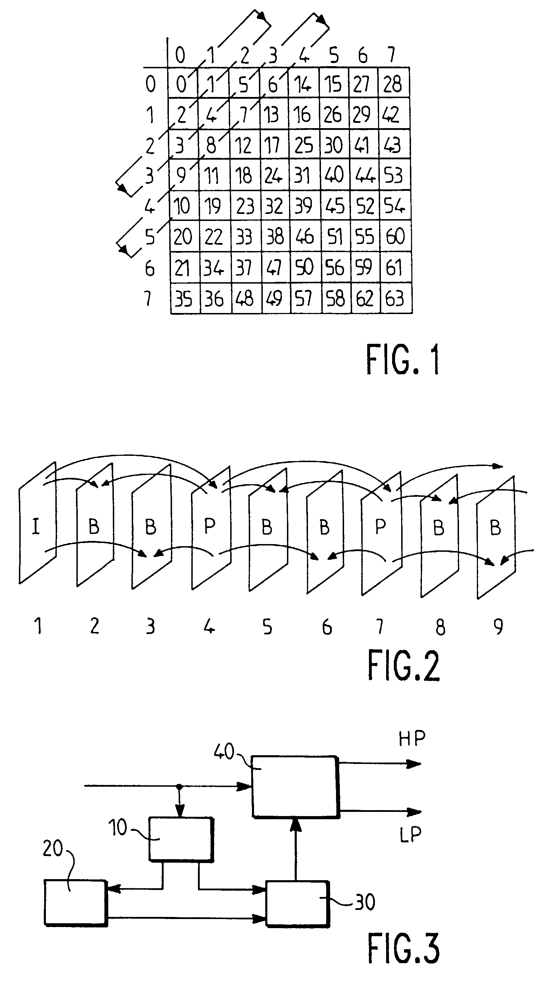

La figure 1 illustre cet exemple de mode de balayage : à chacun des coefficients (64 dans un bloc de 8 x 8 points d'image) est attribué un numéro correspondant à l'ordre dans lequel les coefficients seront codés (ici O pour le coefficient direct DC et 1 à 63 pour les coefficients AC). Cet ordre des coefficients correspond, de fait, à leur importance selon un critère psychovisuel lié aux fréquences spatiales dans le bloc. En effet, la sensibilité de l'oeil humain décroît lorsque la fréquence spatiale des structures présentes dans l'image s'accroît. Or le premier coefficient, en position O, correspond à une structure de bloc uniforme, et les coefficients des lignes et des colonnes correspondent respectivement de gauche à droite à des fréquences spatiales horizontales croissantes et de haut en bas à des fréquences spatiales verticales croissantes. Cette lecture des coefficients, dans le sens des flèches indiquées sur la figure 1, est suivie du codage VLC qui utilise les mots de code les plus courts pour les symboles à coder les plus fréquents et les mots de code les plus longs pour les symboles les moins fréquents (et conduit ainsi à une longueur moyenne de mot de code inférieure à ce qu'elle serait avec une technique de codage à longueur fixe).

A l'intérieur d'une séquence d'images, une image déterminée présente elle aussi, souvent, des similitudes avec les images qui l'entourent. Cette redondance temporelle autorise à utiliser une image pour en prédire une autre : la première image est, comme on l'a vu plus haut, codée normalement (image intra I), c'est-à-dire indépendamment de toute autre image, mais ensuite seule la différence entre les points d'image de deux images distinctes est codée (images prédites P ou B). Le choix entre les différents types de prédiction possibles est effectué sur la base du résultat d'une estimation de mouvement des objets contenus dans les images, effectuée elle-même au niveau des macroblocs : on dispose donc, alors, de macroblocs dits intra (car codés de façon autonome) ou de macroblocs prédits. Une image intra I ne contient que des macroblocs intra et permet un décodage autonome, sans référence à d'autres images de la séquence. Une image prédite de type P ne contient que des macroblocs intra ou des macroblocs prédits à partir d'informations contenues dans une image antérieure (macroblocs P). Une image prédite de type B contient n'importe quel type de macroblocs (intra, ou prédits à partir d'une image antérieure ou d'une image postérieure, ou prédits à l'aide d'une interpolation bidirectionnelle entre une image antérieure et une image postérieure).

La figure 2 donne un exemple d'une succession d'images codées de type I, P, B telles qu'affichées (l'ordre de transmission étant, on l'a précisé plus haut, différent de l'ordre naturel d'affichage représenté sous ces images, ce qui permet le décodage des images P nécessaires au décodage des images B qui les précèdent dans l'ordre naturel d'affichage). La prédiction est effectuée elle-même par exemple par recherche de la corrélation entre le bloc de l'image courante et l'un des blocs présents dans une fenêtre de recherche définie dans l'image de référence antérieure et/ou postérieure associée à cette image courante, le bloc retenu dans ladite image de référence étant celui qui donne la meilleure corrélation. Les flèches, sur la figure 2, indiquent à partir de quelle(s) image(s) une image P ou B est prédite dans l'exemple décrit.

Un flot de données MPEG comprend donc six niveaux d'informations, chaque niveau englobant le niveau inférieur et quelques informations additionnelles. Au niveau le plus élevé correspond la séquence d'images, qui commence par un en-tête (header, en anglais) comprenant les informations nécessaires au décodage de la séquence (code de départ de séquence, format, cadence d'image, cadence des bits, taille de mémoire, matrices de quantification) et se termine par un code de fin de séquence.

Au niveau inférieur, le groupe d'images GOP comprend un nombre quelconque d'images, dont au moins une image I. Bien que ce ne soit pas indispensable, chaque GOP peut être autonome (il commence alors par une image I et se termine par une image I ou P) et peut être décodé indépendamment de toute image antérieure ou postérieure à lui. En outre, la succession des images I, P, B est souvent périodique, comme dans le cas de l'exemple de la figure 2, mais ce n'est là non plus pas indispensable. Chaque GOP contient un en-tête suivi d'un certain nombre d'images. Cet en-tête marque le début du GOP et contient des informations additionnelles : code de départ de GOP, durée de la première image affichée du GOP, indicateur de codage autonome du GOP, etc... On a vu plus haut que l'ordre de transmission des images d'un GOP n'est en général pas l'ordre naturel des images avant codage ou après décodage.

Le niveau encore inférieur, qui correspond à l'image, inclut un en-tête d'image suivi d'un nombre déterminé de tranches d'image. Là encore, l'en-tête marque le début de l'image et contient des informations additionnelles : code de départ de l'image, référence temporelle de l'image, type de l'image (I, P, B), et autres codes ou indicateurs.

Le niveau encore inférieur correspond à la tranche d'image et inclut un en-tête de tranche suivi d'un certain nombre de macroblocs. L'en-tête marque le début de la tranche et contient des informations additionnelles : code de départ de la tranche, pas de quantification des coefficients DCT, etc...

Seuls les quatre niveaux supérieurs qui viennent d'être énumérés contiennent des données de synchronisation. Cette synchronisation est assurée à chaque fois par un code de départ, ici d'une longueur de 32 bits, comprenant d'une part le mot de synchronisation lui-même (24 bits) et d'autre part huit bits indicateurs du niveau (séquence, GOP, image, tranche). Chaque mot de synchronisation est unique pour éliminer tout risque de confusion lors du décodage.

Au niveau inférieur suivant, qui correspond au macrobloc, on trouve un en-tête de macrobloc suivi d'un certain nombre de blocs, ici 6 au maximum (un macrobloc contient normalement six blocs, comme on l'a vu, mais tout bloc dont les coefficients sont tous nuls n'est pas transmis). Cet en-tête contient lui aussi quelques informations additionnelles telles que l'adresse du macrobloc (pour connaître sa position), son type (pour indiquer son mode de codage : intra, prédiction monodirectionnelle, prédiction bidirectionnelle), facteur de quantification, existence ou non d'un vecteur de mouvement associé, vecteur de mouvement s'il y a lieu, indication de ceux des blocs qui sont codés dans le macrobloc, etc...

Le dernier niveau est celui des blocs, qui représentent ici des sections de 8 x 8 points d'image de la matrice de luminance ou des matrices de chrominance. Chaque bloc, on l'a vu, subit une transformation DCT qui le convertit en un bloc de coefficients (coefficient DC et coefficients ACs). Comme les macroblocs, les blocs sont, selon leur mode de codage, de type intra (et ils commencent alors toujours par un coefficient DC) ou bien prédits (et dans ce cas, ils comprennent au moins un coefficient AC non nul, sinon ils ne sont pas codés). Le codage des coefficients eux-mêmes est différent pour les DCs et pour les ACs. Pour les coefficients DC, le mot de code traduit la différence entre le DC du bloc courant et le DC du précédent bloc codé (ce précédent coefficient de bloc DC étant donc utilisé à des fins de prédiction, aussi bien dans le cas de la luminance que dans celui de la chrominance). Pour les ACs, il n'y a pas de codage différentiel : le mot de code comprend systématiquement une plage de zéros de longueur variable, suivie de la valeur absolue du premier coefficient non nul, puis du bit de signe de ce coefficient. Chaque bloc se termine par un code de fin de bloc qui prend place dès que tous les coefficients suivants sont nuls.

Ces rappels relatifs à MPEG1 étant effectués, la description de l'invention proprement dite peut être entreprise. L'étude précédente a souligné que certaines données MPEG1 étaient plus importantes que d'autres. Par exemple, MPEG1 utilise une prédiction compensée en mouvement, et les vecteurs de mouvement décrivant le mouvement des blocs sont des informations essentielles dont la perte conduit sur l'image à des artefacts très visibles : le déplacement de macroblocs entiers. Une erreur sur les DCs entraîne, elle, un changement de couleur complet d'un bloc ou d'un macrobloc. Les vecteurs de mouvement et les DCs, codés de façon différentielle, sont en outre très sensibles à la propagation des erreurs. Enfin, du fait de la technique de prédiction temporelle entre images, des erreurs dans les images de type I ou P se répercutent dans celles de type B, tant qu'une nouvelle image I n'est pas survenue.

La solution technique maintenant décrite d'une part prend en compte cette importance variable des diverses données, cette hiérarchie entre elles (ici trois types de données essentiellement), et crée d'autre part plusieurs niveaux de protection des informations ainsi classées hiérarchiquement (deux, dans l'exemple décrit plus loin) Les données ainsi protégées de façon spécifique sont ensuite transmises et/ou stockées, après multiplexage par exemple. Cependant, avant de décrire le dispositif de traitement qui met en oeuvre cette solution, on va présenter les étapes essentielles du processus de cette mise en oeuvre.

La première de ces étapes consiste à examiner et trier les informations MPEG1 par degré d'importance décroissant:
- les en-têtes des niveaux supérieurs ;
- les en-têtes de macrobloc ;
- les coefficients DC ;
- les coefficients AC.
Parmi ces informations, les en-têtes, les vecteurs de mouvement (qui sont en partie des en-têtes de macrobloc) et les coefficients DC suffisent, à eux seuls, pour reconstruire une image extrêmement sommaire et peu esthétique, mais cependant reconnaissable par rapport à l'image d'origine. Différents essais et tests statistiques ont montré que, dans un groupe d'images GOP, ces données n'utilisent en général pas plus de 30 % du débit global, pourcentage qui, dans la suite de la description, constituera donc la base de répartition du débit global entre un canal de transmission dit de haute priorité (noté ici HP) et un canal de transmission dit de basse priorité (noté ici LP).

La deuxième étape consiste à réaliser à l'intérieur d'un groupe d'images GOP une modification locale de cette répartition de débit entre les canaux HP et LP. En effet, dans des images de type B, les en-têtes de macroblocs occupent souvent plus de 50 % du débit, mais seulement 5 % environ, ou moins encore, dans des images I. Une répartition locale du débit est donc possible, tout en maintenant bien sur la proportion moyenne égale à 30 % sur la totalité du GOP. Cette adaptation locale de la répartition, qui tente de favoriser les informations les plus importantes selon la hiérarchie déterminée établie, est effectuée dans chaque tranche, car le débit varie énormément d'une tranche à l'autre, les tranches intra comprenant bien plus de coefficients AC, par exemple, que les tranches prédites.

La mise en oeuvre de ces étapes est réalisée à l'aide du dispositif de traitement représenté sur la figure 3. Ce dispositif comprend tout d'abord un circuit de comptage 10, qui reçoit, parmi le flot de données numériques, successivement chaque groupe d'images GOP et détermine puis stocke en mémoire le nombre de bits qu'utilise chaque catégorie de données pour chaque tranche de ce GOP. Ces données numériques sont également stockées dans une mémoire adressable 40. Deux situations peuvent alors se présenter :
(a) la première d'entre elles est celle où, pour la totalité des tranches du GOP, le nombre global des bits correspondant aux en-têtes de tranche et de macroblocs et aux coefficients DC reste inférieur au nombre de bits qui, pour tout le GOP, correspond à l'allocation HP (on appellera ainsi par la suite le nombre de bits "haute priorité", et allocation LP le nombre de bits "basse priorité" complémentaire par rapport à la totalité des bits d'un GOP).
(b) la deuxième situation, moins fréquente, est celle où ce nombre global des bits correspondant aux en-têtes de tranche et de macroblocs et aux coefficients DC est supérieur à l'allocation HP du GOP et où l'excédent de bits doit être incorporé à l'allocation LP et être transmis par le canal LP.

La détermination effectuée par le circuit 10 est importante. En effet, l'affectation réelle des bits à transmettre au canal HP ou au canal LP est opérée différemment selon le résultat de cette détermination. Dans le cas de la situation (a) ci-dessus, la totalité des informations les plus importantes peut être transmise par le canal HP, et l'affectation HP réelle de chaque tranche est la suivante :
- à chaque tranche est affecté le nombre total exact de bits dont elle a besoin pour cette transmission HP des en-têtes de tranche et de macroblocs et coefficients DC ;
- la totalité des bits ainsi alloués pour toutes les tranches est soustraite de l'allocation globale HP par GOP, et le nombre de bits résiduel ainsi obtenu (ou allocation HP résiduelle) est utilisé, conjointement avec la totalité de l'allocation globale LP par GOP, pour la transmission de tous les bits restants, qui correspondent à des coefficients AC. L'affectation HP ou LP de ces bits restants est réalisée en répartissant l'allocation HP résiduelle entre la totalité des tranches du GOP, avec cependant une priorité pour les tranches appartenant à des images intra I (car ces images I servent de base à la prédiction des images prédites P ou B et doivent donc être le moins possible touchées par des erreurs de transmission). Si l'allocation résiduelle HP est suffisante pour y affecter la totalité des bits appartenant à de telles tranches intra I et qu'il subsiste encore une allocation résiduelle HP, cette dernière est cette fois destinée aux bits des tranches appartenant à des images prédites de type P, puis, éventuellement, s'il y a encore de la place, aux bits des tranches appartenant à des images prédites de type B. Si l'allocation résiduelle HP est au contraire plus faible que la totalité des bits correspondant à des tranches I, cette allocation est répartie entre toutes lesdites tranches I, et les bits non alloués de ces tranches I reçoivent une affectation LP, de même que la totalité des bits restants.

Dans le cas contraire de la situation (b), la totalité des informations les plus importantes ne peut pas être tout entière transmise par le canal HP, et la fraction excédentaire devra être transmise par le canal LP. Par souci de simplification de l'affectation, le processus de réalisation de cette affectation est ici l'inverse du précédent :
- à chaque tranche est affecté le nombre total exact de bits dont elle a besoin pour la transmission LP des informations les moins importantes (les coefficients AC) ;
- la totalité des bits ainsi alloués pour toutes les tranches est soustraite de l'allocation globale LP par GOP, et le nombre de bits résiduel ainsi obtenu (ou allocation LP résiduelle) est utilisé, conjointement avec la totalité de l'allocation globale HP par GOP, pour la transmission de tous les bits restants, qui correspondent aux en-têtes de tranche et de macroblocs et aux coefficients DC. Là encore, l'affectation LP ou HP de ces bits restants est effectuée par une répartition de l'allocation LP résiduelle entre la totalité des tranches du GOP, avec ici une priorité pour les tranches B, puis P, qui craignent moins que les tranches I d'être touchées par des erreurs de transmission. Si l'allocation résiduelle LP est suffisante pour y affecter la totalité des bits appartenant à de telles tranches B, puis P, et qu'il subsiste encore une allocation résiduelle LP, cete dernière est destinée à des bits de tranches appartenant à des images I. Si l'allocation résiduelle LP est au contraire plus faible que la totalité des bits des tranches B et P, cette allocation est répartie entre toutes lesdites tranches B et P, et les bits non alloués de ces tranches B et P reçoivent une affectation HP, de même que la totalité des bits restants.

Le circuit de comptage 10 a donc, pour résumer, permis de déterminer et mémoriser le nombre total N_{T}(GOP) de bits correspondant à un GOP, le nombre N_{S}(MBK) de macroblocs dans chaque tranche de ce GOP, et le nombre de bits correspondant à chaque tranche et utilisé par chaque catégorie de données : N_{S}(HDR) pour les en-têtes de tranche, N_{S}(OVH) pour les en-têtes de macrobloc, N_{S}(DCS) pour les coefficients DC, et N_{S}(ACS) pour les coefficients AC. Un circuit d'allocation 20, prévu en sortie du circuit 10, permet de réaliser l'ensemble des affectations de bits aux canaux HP et LP telles que décrites ci-dessus dans leur principe et de mémoriser, notamment en vue de leur transmission et/ou stockage nécessaires pour les repérages lors du traitement inverse à la réception, les nombres de bits correspondant à ces affectations, par tranche : N(HHP) et N(HLP) pour les en-têtes de tranche, N(VHP) et N(VLP) pour les en-têtes de macrobloc, N(DHP) et N(DLP) pour les coefficients DC, et N(AHP) et N(ALP) pour les coefficients AC (HP et LP désignant toujours, dans ces notations, respectivement le canal HP et le canal LP).

Ces nombres étant connus et mémorisés, une étape suivante consiste à opérer une redistribution de l'ordre des bits de chaque tranche du GOP. Cette redistribution est définie par un circuit de commande de brassage 30 prévu en sortie des circuits 10 et 20 et qui commande la lecture de la mémoire adressable 40 dans un ordre différent de l'ordre d'arrivée des données et donc d'écriture. Ce circuit 30 opère par tranche puis, par un rebouclage après traitement d'une tranche, permet d'opérer successivement pour toutes les tranches du GOP. Ledit traitement n'est donc décrit que pour une seule tranche.

Le principe de ce traitement de brassage pour une tranche est le suivant. On définit, pour chacune des informations répertoriées précédemment par ordre d'importance décroissante et dans chacun des deux canaux HP et LP, des paquets de transmission de longueur déterminée égale à la longueur moyenne de chacune de ces informations par bloc, dans une tranche d'image. On transmet alors, par bloc, au moins les premiers bits relatifs à cette information concernée. Si, pour ce bloc, les bits relatifs à ladite information occupent moins de place que celle disponible dans le paquet, il reste dans ce paquet de la place disponible (appelée trou), et ces éventuels emplacements disponibles servent alors à placer les bits excédentaires qui, pour un bloc, ne tiendraient pas dans le paquet. Ainsi, en fonction de la répartition HP-LP adoptée et des allocations réalisées par le circuit 20, une redistribution (ou brassage) des bits de chaque tranche est organisée pour remplir de façon optimale les paquets correspondant à chaque type d'informations.

Cette redistribution doit cependant opérer par tests préalables, compte tenu des diverses situations qui peuvent se présenter en fonction des valeurs d'allocations déterminées précédemment. Dans l'exemple de réalisation ici décrit, on distingue quatre situations particulières, qui sont successivement étudiées ci-dessous.

Dans la première de ces situations, qui est en général la plus fréquente, le nombre de bits HP (= allocation HP) est supérieur à la somme des nombres de bits N_{S}(HDR), N_{S}(OVH) et N_{S}(DCS) (respectivement : en-têtes de tranche, en-têtes de macrobloc, coefficients DC). On définit alors, de façon comparable à ce qui a été vu précédemment en référence au document USP-4907101 déjà cité, une boîte HP des en-têtes de macroblocs, de longueur égale à la longueur moyenne desdits en-têtes de macroblocs sur toute la tranche. Puis on définit, de façon autonome, une boîte HP des coefficients DC de longueur égale à la longueur moyenne desdits coefficients DC sur toute la tranche. L'allocation HP résiduelle est enfin répartie de façon égale entre les coefficients AC, ce qui définit une boîte HP des coefficients AC, de longueur égale à cette allocation HP résiduelle divisée par le nombre de blocs de la tranche. Pour les coefficients AC résiduels, la division du nombre de bits correspondant par le nombre de blocs dans la tranche définit de même une boîte LP des coefficients AC. On doit ici remarquer que les divisions permettant de calculer les longueurs des boîtes ont le plus souvent des restes, et que la longueur, en nombre de bits, de ces restes doit alors être transmise, d'une façon qui est décrite plus loin.

Dans la deuxième des situations mentionnées plus haut, le nombre de bits HP, ou allocation HP, est inférieur à la somme N_{S}(HDR) + N_{S}(OVH) + N_{S}(DCS), mais reste supérieur à N_{S}(HDR) + N_{S}(OVH) (en-tête de tranche + en-têtes de macrobloc). On définit alors de même, pour chacun des types de données pouvant être affectés totalement au canal HP (en-têtes de tranche et en-têtes de macrobloc) ou au canal LP (les coefficients AC), une longueur moyenne associée définissant une boite de longueur fixe, puis, pour celles des données qui doivent être réparties entre ces deux canaux (les coefficients DC), d'abord la longueur moyenne associée au canal HP puis celle associée au canal LP, ces deux dernières longueurs définissant de même une boîte de longueur fixe correspondante.

Dans la troisième des situations mentionnées, l'allocation HP est inférieure à la somme N_{S}(HDR) + N_{S}(OVH) , mais reste supérieure à N_{S}(HDR) (en-tête de tranche seul). Là encore, on définit alors des longueurs moyennes, ou boîtes de longueur fixe, pour chacun des types de données (ici, les ACs et les DCs) pouvant être affectés à l'un des canaux HP ou LP (ici, le canal LP pour les ACs et les DCs), puis, pour celles des données qui doivent être réparties entre les deux canaux (les en-têtes de macrobloc), d'abord la longueur moyenne associée au canal HP puis celle associée au canal LP, ces deux dernières longueurs définissant de même une boîte de longueur fixe correspondante.

On ne citera que pour mémoire la quatrième des situations évoquées, dans laquelle l'allocation HP est insuffisante pour permettre la transmission de l'en-tête de tranche. Cette situation ne permet plus la mise en oeuvre des principes de répartition par boîtes HP ou LP : il s'agit d'une situation de repli, où le dispositif reprend un autre mode de fonctionnement, différent de celui selon l'invention, par exemple celui décrit dans le document USP-4907101 déjà cité. On précisera enfin ici que les données HP et LP sont, après lecture de la mémoire adressable 40, envoyées vers un circuit de multiplexage 50, en sortie duquel peuvent avoir lieu la transmission et/ou le stockage.

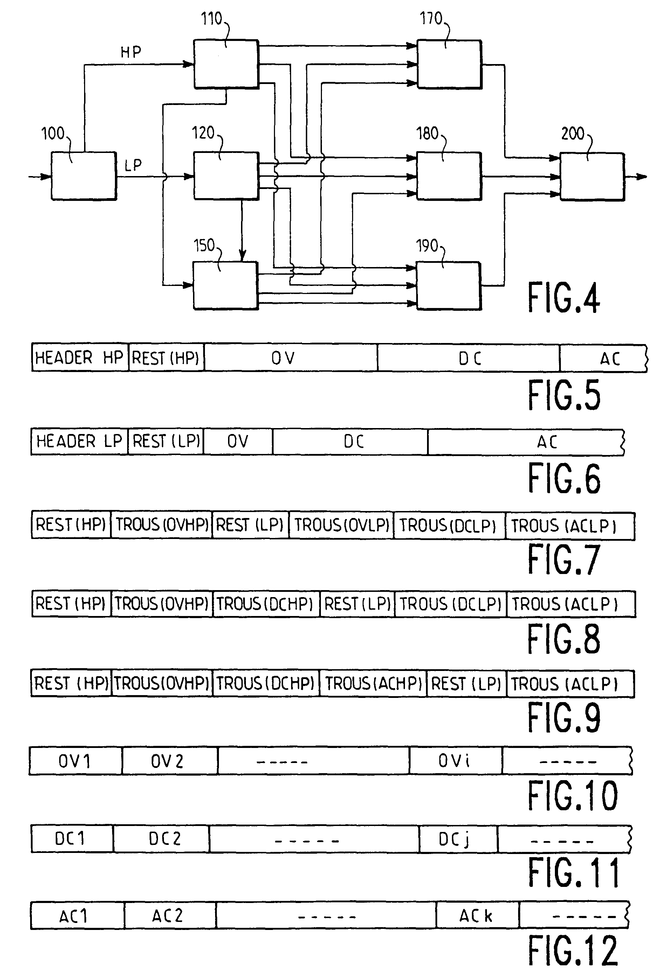

Réciproquement, lorsque des signaux numériques, préalablement codés par codage à longueur variable, ont subi après ce codage un traitement direct tel que celui effectué par le dispositif représenté sur la figure 3, et que les signaux ainsi traités ont été transmis et/ou stockés, leur traitement inverse avant tout décodage à longueur variable est par exemple réalisé à l'aide d'un dispositif de traitement tel que celui de la figure 4.

Ce dispositif comprend tout d'abord, dans le cas ici représenté de deux niveaux de protection des informations, essentiellement une mémoire 110 dite de haute priorité (HP) et une mémoire 120 dite de basse priorité (LP), prévues en parallèle et précédées d'un circuit 100 d'aiguillage des signaux transmis et/ou stockés parvenant au dispositif de la figure 4. Le dispositif comprend également un circuit de mémorisation temporaire, qui est ici une mémoire intermédiaire 150 recevant des données en provenance des mémoires HP 110 et LP 120 (on verra plus loin quelles sont ces données), ainsi que des première, deuxième et troisième mémoires par type de donnée 170, 180, 190. Ces trois mémoires en parallèle sont enfin suivies d'un commutateur 200 qui sélectionne alternativement l'une de leurs trois sorties, en vue du décodage ultérieur du flot de données MPEG1 ainsi reconstitué.

Comme le décodage qui interviendra en aval du dispositif de traitement opèrera sur chaque tranche l'une après l'autre, les signaux transmis et/ou stockés qui parviennent au dispositif de traitement se suivent tranche par tranche et, pour une tranche déterminée, comprennent donc, dans le cas présent :
(a) un mot de synchronisation (encore appelé start code SC) pour chacune des mémoires haute priorité 110 (HP) et basse priorité 120 (LP) (comme on connaît maintenant au bit près, la taille des informations correspondant à chaque tranche, la position de ces mots de synchronisation SC(HP) et SC(LP) suivants -c'est-à-dire pour la tranche suivante- est connue, et ces mots sont donc repérables dans la séquence des signaux reçus par le dispositif de la figure 4) ;
(b) les nombres N(MBK), N(HHP), N(HLP), N(VHP), N(VLP), N(DHP), N(DLP), N(AHP), N(ALP) correspondant, dans le cas du dispositif de la figure 3, d'une part, pour le premier, au nombre de macroblocs dans la tranche et d'autre part, pour les autres nombres, aux affectations de bits aux canaux HP et LP, ces nombres exprimant pour chacun de ces deux canaux les nombres de bits pour les en-têtes initiaux, les en-têtes de macrobloc, les coefficients DC et les coefficients AC respectivement (il est bien entendu que, selon les diverses situations, étudiées plus haut, qui peuvent se présenter en fonction des valeurs d'allocations, certains de ces nombres peuvent être nuls, par exemple N(VLP) le plus souvent, puisqu'on arrive en général à transmettre les en-têtes de macrobloc entièrement dans le canal HP) ;
(c) un en-tête lié au standard MPEG1 ;
(d) les bits correspondant aux restes, s'il y en a ;
(e) l'ensemble des bits correspondant aux boîtes de longueur fixe.

Au début du traitement inverse effectué par le dispositif de la figure 4, les informations transmises par les canaux HP et LP sont respectivement dirigées vers la mémoire 110 ou la mémoire 120. Les figures 5 et 6 montrent le contenu de ces mémoires.

La mémoire 110 représentée sur la figure 5 contient tout d'abord sous l'application "header HP" le mot de synchronisation HP et les indications des nombres de bits correspondant, pour le canal HP, aux différents types de données : N(HHP), N(VHP), N(DHP), N(AHP), puis tous les bits correspondant à REST(HP) si cette valeur est différente de O. La mémoire 110 contient ensuite tous les bits transmis dans les boîtes et correspondant successivement pour le canal HP aux différents types de données pour la tranche concernée (c'est-à-dire les bits dont les nombres sont, successivement N(VHP), N(DHP), N(AHP)). On rencontre successivement l'ensemble noté OV de toutes les boîtes correspondant aux en-têtes de macroblocs, puis l'ensemble DC de toutes celles correspondant aux coefficients DC, et enfin l'ensemble AC de toutes celles correspondant aux coefficients AC. Chaque boîte contient elle-même, par bloc transmis, d'une part les premiers bits du bloc et d'autre part les bits occupant l'éventuel trou disponible et correspondant à des informations d'un autre ou d'autres blocs. La position de la frontière entre ces deux groupes de bits dépend bien entendu de la répartition qui avait été effectuée avant transmission et/ou stockage.

De même, la mémoire 120 représentée sur la figure 6 contient un premier ensemble d'informations, à savoir, sous l'appellation "header LP", le mot de synchronisation LP, et tous les nombres N(HLP), N(VLP), N(ALP) pour le canal LP, puis tous les bits correspondant à REST(LP) si cette valeur est différente de O. La mémoire 120 contient ensuite tous les bits transmis dans les boîtes et correspondant successivement (ensembles OV, DC, AC similaires aux précédents) pour le canal LP aux différents types de données pour la tranche concernée (c'est-à-dire les bits dont les nombres sont successivement N(HLP), N(VLP), N(DLP), N(ALP).

L'ensemble des bits correspondant, en tête de la mémoire 110, au mot de synchronisation SC(HP), aux indications N(...) de nombres de bits correspondant aux différents types de données, et à REST(HP) éventuellement, constitue un en-tête de tranche HHP dont le nombre de bits est exprimé par N(HHP). De façon similaire, l'ensemble des bits correspondant au mot de synchronisaton SC(LP), et à REST(LP) éventuellement, constitue un en-tête de tranche HLP dont le nombre de bits est exprimé par N(HLP). Bien entendu, dans le cas des données HP envoyées vers la mémoire 110 comme dans celui des données LP envoyées vers la mémoire 120, les nombres N(.) sont envoyés autant de fois que nécessaire, c'est-à-dire N(MBK) fois pour N(VHP) ou N(VLP) puisqu'il y a autant d'en-têtes de macroblocs que de macroblocs, et 6 x N(MBK) fois pour N(DHP), N(AHP), N(DLP), N(ALP) puisqu'il y a six blocs par macrobloc.

Le fonctionnement du dispositif de traitement inverse de la figure 4 va maintenant apparaître en décrivant d'abord en détail comment les signaux reçus par ledit dispositif après leur transmission et/ou leur stockage sont aiguillés vers les mémoires 110 et 120, ce qui constitue la première phase dudit fonctionnement.

La première étape de cet aiguillage, repérée par les indications 1 sur les figures 5 et 6, consiste à recevoir les "headers" HP et LP et à aiguiller le premier vers la mémoire 110 (figure 5) et le second vers la mémoire 120 (figure 6). Ces "headers" sont suivis respectivement, dans la mémoire 110, des bits de REST(HP), s'ils existent, et, dans la mémoire 120, des bits correspondant à REST(LP), s'ils existent également. Cette deuxième étape, notée 2 sur les figures 5 et 6, est suivie d'une troisième étape, notée 3 sur ces mêmes figures et qui consiste en l'écriture dans boîtes HP et LP respectivement dans la mémoire 110 et dans la mémoire 120. Dans la mémoire 110 des données haute priorité sont ainsi successivement écrits, à la suite des bits de REST(HP), les contenus des boîtes HP correspondant aux en-têtes de macroblocs, puis ceux des boîtes HP correspondant aux coefficients DC, et enfin ceux des boîtes HP correspondant aux coefficients AC. De même, sont successivement écrits dans la mémoire 120 des données basse priorité, à la suite des bits de REST(LP), les contenus des boîtes LP correspondant aux en-têtes de macroblocs (si ces boîtes existent, puisqu'on a vu qu'on arrive en général à transmettre les en-têtes de macroblocs entièrement dans le canal HP), puis ceux des boîtes LP correspondant aux coefficients DC, et enfin ceux des boîtes LP corrrespondant aux coefficients AC. La première phase du fonctionnement, à savoir l'aiguillage des données reçues par le dispositif vers les mémoires HP et LP, est achevée.

La deuxième phase de ce fonctionnement consiste en un regroupement des données par types de donnée tels que définis dans la hiérarchie déterminée. Ce regroupement va être réalisé dans les mémoires par type de donnée 170, 180, 190, et avec l'aide de la mémoire intermédiaire 150. On a vu en effet que, pour les blocs courts, il restait dans la boîte correspondante de la place disponible, ou trou, pour les bits excédentaires des blocs trops longs. La mémoire intermédiaire 150 permet de récupérer ces trous après avoir déterminé leur position dans les mémoires 110 et 120. Après lecture de ces deux mémoires, les trous, stockés temporairement dans la mémoire 150, vont pouvoir être renvoyés dans la position correcte pour chacun des blocs, par lecture de cette mémoire intermédiaire 150 et écriture dans celle des mémoires 170, 180, 190 qui convient.

Pour cette deuxième phase de fonctionnement, il faut cependant distinguer trois situations : celle où N(OVLP) est différent de 0, ce qui implique que N(DCHP) et N(ACHP) sont égaux à 0, puis celle où N(OVLP) est égal à 0 et N(DCLP) différent de 0, ce qui implique que N(ACHP) est égal à 0, et enfin celle où N(OVLP) et N(DCLP) sont tous deux égaux à 0. Le contenu de la mémoire intermédiaire 150, dans laquelle on va trouver dans tous les cas des données HP puis des données LP, est constitué de façon différente selon qu'on se trouve dans l'une ou l'autre de ces trois situations, et est représenté sur trois figures distinctes 7 à 9.

La figure 7 correspond à la première situation, c'est-à-dire au cas où, N(OVLP) étant différent de O, les données correspondantes (en-têtes de macroblocs) sont transmises non seulement par le canal HP, mais aussi, pour l'excédent de bits par rapport à l'allocation HP, par le canal LP. Dans ce cas, la mémoire intermédiaire 150 reçoit successsivement les informations suivantes : REST(HP), lu (si cette valeur est différente de O) dans la mémoire HP 110, puis, parmi les bits des boîtes HP correspondant aux en-têtes de macroblocs, tous ceux (notés TROUS(OVHP) de façon globale) qui correspondent aux trous et qui sont également lus dans la mémoire 110. Cette écriture de données HP dans la mémoire 150 étant alors achevée, on peut y écrire, à leur suite, les données LP (lues dans la mémoire 120), c'est-à-dire successivement REST(LP), puis les bits excédentaires (notés TROUS(OVLP)) correspondant aux en-têtes de macroblocs et situés dans les boîtes LP correspondantes, puis les bits notés TROUS(DCLP) et correspondant aux coefficients DC (transmis dans le cadre de l'allocation LP), puis, enfin, les bits notés TROUS(ACLP) et correspondant aux coefficients AC (également transmis dans le cadre de l'allocation LP).

La figure 8 correspond de façon similaire à la deuxième situation, c'est-à-dire au cas où ce sont les coefficients DC qui sont transmis partiellement par le canal HP et partiellement par le canal LP. Sont alors successivement écrites en mémoire 150 les informations suivantes : REST(HP) et TROUS(OVHP) comme précédemment, lus dans la mémoire 110, puis, parmi les bits des boîtes HP correspondant aux coefficients DC, tous ceux (notés TROUS(DCHP) de façon globale comme précédemment) qui correspondent aux trous (lus également dans la mémoire 110), puis, par lecture dans la mémoire 120, les informations REST(LP) (si celle-ci existe), TROUS(DCLP) (c'est-à-dire les bits excédentaires correspondant aux coefficients DC et situés dans les boîtes LP correspondantes), et TROUS(ACLP) (c'est-à-dire les bits correspondant aux coefficients AC transmis entièrement dans le cadre de l'allocation LP).

La figure 9 correspond, elle, à la troisième situation, c'est-à-dire au cas où ce sont les coefficients AC qui sont transmis partiellement par le canal HP et partiellement par le canal LP. Sont alors successivement écrites en mémoire 150, par lecture dans la mémoire 110, les informations suivantes : REST(HP), TROUS(OVHP), TROUS(DCHP), lus dans la mémoire 110, puis, parmi les bits des boîtes HP correspondant aux coefficients AC, tous ceux (notés TROUS(ACHP) de façon globale comme précédemment) qui correspondent aux trous (lus également dans la mémoire 110), puis, par lecture dans la mémoire 120, les informations REST(LP) (si celle-ci existe) et TROUS(ACLP) (c'est-à-dire les bits excédentaires correspondant aux coefficients AC et situés dans les boîtes LP correspondantes).

Une fois l'ensemble des trous stocké dans la mémoire intermédiaire 150, une lecture coordonnée de celle-ci et des mémoires 110 et 120 permet de regrouper les données de même type (en-têtes de macroblocs, coefficients DC, coefficients AC) dans les mémoires 170 à 190 respectivement. Les bits de début des blocs sont lus dans la mémoire HP 110 et/ou la mémoire LP 120, et les trous venant éventuellement compléter ces bits de début de blocs sont lus dans la mémoire 150. Lorsque l'ensemble des bits correspondant aux en-têtes de macroblocs (OV1 pour le premier macrobloc, OV2 pour le deuxième macrobloc,..., OVi pour le i-ième macrobloc, etc...) sont présents dans la mémoire 170, l'ensemble des bits correspondant aux coefficients DC (DC1, DC2,..., DCj,... etc...) dans la mémoire 180, et l'ensemble des bits correspondant aux coefficients AC (AC1, AC2,..., ACk,..., etc...) dans la mémoire 190, le commutateur 200 sélectionne alternativement celle des trois sorties des mémoires 170 à 190 qui convient et reconstitue ainsi sur sa sortie, en lisant par macrobloc et autant de fois qu'il y a de macroblocs dans la tranche un en-tête de macrobloc et six fois (une par bloc) une information DC et une information AC, le flot de données MPEG1 initial.

La lecture des trous dans les mémoires 110 et 120, en vue de leur écriture dans la mémoire intermédiaire 150, est réalisée en définissant d'abord, pour le premier trou de chaque mémoire 110 ou 120, une adresse de lecture initiale ADR.R.INIT. Cette adresse peut être déterminée, puisque le nombre de bits qui la précède est donné par N(HHP) pour la mémoire 110 et par N(HLP) pour la mémoire 120, lorsqu'il s'agit des trous relatifs aux en-têtes de macroblocs. Pour les deux adresses initiales concernant les trous relatifs aux coefficients DC, le nombre de bits qui les précède est donné, pour la mémoire HP 110, par N(HHP) + N(MBK) fois la longueur de boîte HP "en-têtes de macroblocs", et, pour la mémoire LP 120, par N(HLP) + N(MBK) fois la longueur de boîte LP "en-tètes de macroblocs", tandis que, pour les deux adresses initiales concernant les coefficients AC, le nombre de bits qui les précède est donné, pour la mémoire HP 110, par N(HHP) + N(MBK) fois la longueur de boîte HP "en-têtes de macroblocs" + 6 N(MBK) fois la longueur de boîte HP "coefficients DC", et, pour la mémoire LP 120, par N(HLP) + N(MBK) fois la longueur de boîte LP "en-têtes de macroblocs + 6 N(MBK) fois la longueur de boîte LP "coefficients DC". Cette adresse initiale donne dans tous les cas l'adresse du début de la première boîte pour le type de donnée considéré, et, pour obtenir l'adresse de lecture du premier trou correspondant, il faut d'abord lire les bits qui ne correspondent pas aux trous, afin de déterminer la longueur de ceux-ci et d'avancer de cette longueur pour se trouver au niveau du premier bit de chaque trou (s'il existe dans la boite considérée). En procédant ainsi pour toutes les boîtes, puis en renouvelant ce processus pour chaque type de donnée, on est alors en mesure de transférer de la mémoire HP 110 vers la mémoire intermédiaire 150 les bits correspondant à TROUS(OVHP), TROUS(DCHP), ou TROUS(ACHP) selon le type de donnée, puis, juste après ce transfert, d'effectuer le transfert similaire, de la mémoire LP 120 vers la mémoire 150, des bits correspondant à TROUS(OVLP), TROUS(DCLP), ou TROUS(ACLP) selon le type de donnée.

Bien entendu, la présente invention n'est pas limitée aux exemples de réalisation qui viennent d'être décrits, à partir desquels des variantes peuvent être proposées sans pour cela sortir du cadre de l'invention.

En particulier, on a vu, en décrivant lors du traitement direct la redistribution des bits de chaque tranche pour un remplissage optimal des paquets et les tests à effectuer, préalablement à une telle redistribution, pour tenir compte des diverses situations pouvant se présenter en fonction des valeurs d'allocations, que, dans les trois premières des quatre situations mentionnées, les divisions conduisant à la détermination des boîtes HP et LP associées à chaque type de données de longueur variable pouvaient avoir des restes, qui correspondent à des bits excédentaires (leftover bits). Ces bits excédentaires ne sont inclus dans aucune des boîtes définies jusqu'à présent, et l'on définit, pour eux, à nouveau des boîtes HP et LP. La boîte HP est déterminée en soustrayant de l'allocation HP globale le nombre de bits correspondant à toutes les boîtes HP déjà définies (et également le nombre de bits correspondant à l'en-tête de tranche), et la boîte LP est calculée de même, par soustraction de l'allocation LP globale, du nombre de bits correspondant à toutes les boîtes LP existant déjà. Ces calculs sont effectués, comme les précédents, dans le circuit 30 de commande de redistribution de bits, dans lequel ils constituent une étape supplémentaire du processus de redistribution mis en oeuvre.

Par ailleurs, pour ne pas avoir à stocker toute une image ou tout un groupe d'images dans la mémoire adressable 40, c'est-à-dire pour réduire le volume de cette mémoire, il est possible d'utiliser pour toute cette image ou tout ce groupe un processus récursif permettant de valider les comptages effectués pour l'image ou le groupe précédent. Il suffit alors de stocker dans la mémoire adressable 40 seulement le flot de bits correspondant au codage d'une seule tranche, et la capacité de cette mémoire peut donc être plus faible que dans le cas précédent. Pour la première image ou pour le premier groupe d'images, aucune utilisation de comptages précédents n'est possible, bien évidemment, et l'on fixe donc les allocations HP et LP à la même valeur pour chacune des tranches, cette valeur étant égale à ladite proportion globale déterminée (dans l'exemple décrit, 30 % et 70 % respectivement).

Enfin, qu'il s'agisse du traitement direct, tel que celui mis en oeuvre en référence à l'exemple de réalisation de la figure 3, ou du traitement inverse, tel que celui mis en oeuvre en référence à l'exemple de réalisation de la figure 4, il est manifeste que les valeurs du nombre de niveaux de priorité (ici, deux : les niveaux HP et LP) et du nombre de types de données pouvant être ordonnés selon une hiérarchie déterminée (ici, trois : les en-têtes de macroblocs, les coefficients DC, les coefficients AC) ne constituent pas une limitation de l'invention. Pour ces nombres de niveaux et de type de données appelés N et M respectivement, l'exemple décrit, avec N = 2 et M = 3, ne correspond qu'à une réalisation particulière dans le cas d'un flot de données de type MPEG.

## Revendications

1. Dispositif de traitement, en vue d'une transmission, de signaux numériques qui correspondent à une séquence d'images organisées en blocs et ont été préalablement codés au moins en partie selon un codage à longueur variable, lesdits signaux étant constitués de types de données qui peuvent être ordonnés selon une hiérarchie déterminée, qui comprend :
(1) une mémoire adressable de stockage du flot de bits disponible après ledit codage à longueur variable ;
(2) un circuit de comptage recevant également ledit flot de bits en vue de la détermination et du stockage du nombre de bits correspondant dans ce flot à chacun desdits types de données, et ce pour au moins une tranche d'image, une tranche étant définie comme tout sous-ensemble de blocs qui est précédé d'un signal de synchronisation ;
(3) en sortie de ce circuit de comptage, un circuit d'affectation, à chacune desdites tranches et selon une proportion déterminée à respecter globalement dans une image ou dans un groupe d'images, du nombre de bits à transmettre dans N voies de priorités distinctes, ces N nombres de bits étant appelés allocations et correspondant respectivement à chaque voie ;
(4) en sortie desdits circuits, un circuit de commande de redistribution des bits dudit flot pour chacune desdites tranches, comprenant lui-même, pour l'exécution du processus de redistribution des moyens d'affectation à la voie correspondant à la plus haute priorité, en fonction de la valeur de l'allocation correspondante et dans l'ordre hiérarchique décroissant des données, de toutes celles de ces données qui y tiennent entièrement, et d'affectation à la voie correspondant à la plus basse priorité, en fonction de la valeur de l'allocation correspondante et dans l'ordre hiérarchique croissant des données, de toutes celles de ces données qui y tiennent entièrement, caractérisé en ce que le circuit de commande de redistribution des bits comprend en outre :
(a) des moyens de calcul, en nombre de bits et sur l'ensemble des blocs de la tranche concernée, de la longueur moyenne par bloc des données ainsi affectées, pour définir pour chacun des types de données une grandeur dite longueur de boite spécifique égale à ladite longueur moyenne respective ;
(b) pour les types de données ne pouvant pas être affectés exclusivement à l'une ou à l'autre des voies de plus haute et de plus basse priorité, des moyens complémentaires d'affectation à la voie HP de celles de ces données qui y tiennent, par égale répartition dans les tranches, puis d'affectation des données résiduelles à la ou au voies de priorités décroissantes ;
(c) pour ce type de données non affectées exclusivement mais réparties entre au moins deux voies, des moyens complémentaires de calcul similaire de la longueur moyenne par bloc, pour définir également des longueurs de boîte spécifiques , et en ce que les nombres nombres de bits résultant de ces affectations et lesdites longueurs moyennes sont fournis à la mémoire adressable pour une lecture de celle-ci d'une part conformément audit processus de redistribution par voie et d'autre part, pour chaque voie, par paquets de données de même nature constituant des boîtes de longueur égale auxdites longueurs moyennes respectivement, ledit processus de de redistribution par voie et par paquets étant prévu pour placer dans chaque paquet au moins les premiers bits relatifs au type de données hiérarchiques concerné et, dans l'éventuelle place complémentaire restant disponible, les bits excédentaires d'un autre ou d'autres blocs, pour le même type de données.

2. Dispositif selon la revendication 1, caractérisé en ce que lesdits signaux sont constitués de M = 3 types de données, à transmettre dans N = 2 voies distinctes HP et LP, dites de haute et de basse priorité respectivement.

3. Dispositif selon l'une des revendications 1 et 2, caractérisé en ce que, dans le circuit de commande de redistribution de bits, pour ledit processus de redistribution, les moyens de calcul sont prévus pour effectuer, pour l'ensemble des bits excédentaires constituant les restes éventuels des divisions réalisées pour les calculs de longueurs moyennes par bloc et pour chacune des voies, des calculs similaires de longueur moyenne par bloc et par voie, et en ce que lesdites longueurs moyennes sont, comme les précédentes, fournies à la mémoire adressable.

4. Dispositif selon l'une des revendications 1 à 3, caractérisé en ce que la capacité de ladite mémoire adressable est au moins égale à celle de l'image ou du groupe d'images dans laquelle ou lequel une proportion déterminée doit être respectée globalement.

5. Dispositif selon l'une des revendications 1 à 3, caractérisé en ce que la capacité de ladite mémoire adressable est au moins égale à celle d'une tranche d'image et en ce que, pour l'image ou le groupe d'images courant, les comptages de nombres de bits correspondant à chaque type de données sont les mêmes que pour l'image ou le groupe d'images précédent, exception faite de la première image ou du premier groupe d'images pour laquelle, ou lequel, les allocations par voie sont fixées, pour chacune des tranches, à la même valeur correspondant à ladite proportion globale déterminée.

6. Dispositif de traitement, après transmission, de signaux numériques qui correspondaient initialement à une séquence d'images organisées en blocs, ces blocs correspondant eux-mêmes à M types de données pouvant être ordonnés selon une hiérarchie déterminée, et qui, avant ladite transmission, avaient été codés au moins en partie selon un codage à longueur variable puis avaient subi après ce codage le traitement de réorganisation temporaire suivant :
(a) par tranche d'image et selon une proportion déterminée à respecter globalement dans une image ou dans un groupe d'image, affectation du nombre de bits à transmettre à l'une ou à l'autre de N voies de priorités distinctes ;
(b) dans chaque voie et spécifiquement pour chaque type de données, redistribution de ces bits par paquets de même longueur égale à une grandeur dite longueur de boîte spécifique et égale, en nombre de bits et sur l'ensemble des blocs de la tranche concernée, à la longueur moyenne par bloc des données ainsi affectées ;
(c) réaffectation, dans les trous laissés disponibles dans ceux des paquets qui sont trop grands pour un bloc, des bits excédentaires d'un autre ou d'autres blocs qui, pour ce ou ces blocs, au contraire ne tiennent pas dans lesdits paquets ;
ledit dispositif de traitement étant caractérisé en ce qu'il comprend :
(1) un circuit d'aiguillage desdits signaux transmis après cette réorganisation temporaire ;
(2) en parallèle sur N sorties dudit circuit d'aiguillage, N mémoires des données correspondant respectivement à chacune des N voies ;
(3) une mémoire intermédiaire de stockage des bits correspondant auxdits trous ;
(4) en parallèle sur chacune de ces (N+1) mémoires, M mémoires par type de donnée ;
(5) en sortie de chacune de ces M mémoires, un commutateur prévu pour sélectionner alternativement l'une des M sorties de ces M mémoires et ainsi reconstituer le flot initial des signaux numériques.

7. Dispositif selon la revendication 6, caractérisé en ce que les signaux numériques correspondent à trois types de données et en ce que les voies de priorités distinctes sont soit une voie HP dite de haute priorité, soit une voie LP dite de basse priorité.

## Patentansprüche

1. Gerät zum Verarbeiten, hinsichtlich einer Übertragung, von digitalen Signalen, die einer in Blöcken organisierten Bildsequenz entsprechen und zuvor zumindest teilweise nach einer Kodierung variabler Länge kodiert wurden, wobei die besagten Signale aus Datentypen gebildet werden, die nach einer bestimmten Hierarchie geordnet werden können, die beinhaltet :
(1) einen adressierbaren Speicher zum Ablegen des nach der besagten Kodierung variabler Länge verfügbaren Bitflusses;
(2) eine Zählschaltung, die auch den besagten Bitfluß hinsichtlich der Bestimmung und der Speicherung der Anzahl Bits entsprechend der jeweiligen besagten Datentypen in diesem Fluß erhält, und, für mindestens einen Bildabschnitt, einen als Block-Untereinheit definierten Abschnitt, der von einem Synchronisationssignal vorangegangen wird;
(3) am Ausgang aus dieser Zählschaltung eine Zuteilungsschaltung zu jedem der besagten Abschnitte und nach einem bestimmten, im Bild oder in einer Bildgruppe global einzuhaltenden Verhältnis der Anzahl über N Wege unterschiedlicher Priorität zu übertragenden Bits, wobei diese N Bitsätze Zuteilungen genannt werden und jeweils einem Weg entsprechen;
(4) am Ausgang der besagten Schaltungen eine Steuerschaltung zur Neuverteilung der Bits des besagten Flusses für jeden der besagten Abschnitte, die selbst wiederum zur Vornahme dieses Neuverteilungsvorgangs über Zuteilungsmittel zu dem entsprechenden Weg höchster Priorität enthalten, gemäß dem Wert der entsprechenden Zuteilung und in abnehmender hierarchischen Ordnung der Daten, von all diesen Daten, die vollständig darin unterkommen, und zur Zuteilung des der geringsten Priorität entsprechenden Weges nach dem Wert der entsprechenden Zuteilung und in ansteigender hierarchischer Ordnung der Daten, all derer dieser Daten, die vollständig darin unterkommen, dadurch gekennzeichnet, daß diese Steuerschaltung zur Neuverteilung der Bits zudem enthält :
(a) Mittel zur Berechnung der Anzahl Bits über den Blocksatz des betreffenden Abschnitts, der durchschnittlichen Länge pro Block der so zugeteilten Daten, um für jeden der Datentypen eine Größe der sogenannten spezifischen Boxlänge zu definieren, gleich der besagten jeweiligen durchschnittlichen Länge;
(b) für die Datentypen, die nicht exklusiv dem einen oder anderen Weg höchster oder geringster Priorität zugeteilt werden können, zusätzliche Mittel zur Zuteilung zum HP-Weg der Daten, die darin unterkommen, durch gleiche Aufteilung in den Abschnitte, dann Zuteilung der restlichen Daten an den oder die prioritär abnehmenden Wege;
(c) für nicht exklusiv zugeteilte Datentypen, doch aufgeteilt über mindestens zwei Wege, zusätzliche Mittel zur gleichartigen Berechnung der durchschnittlichen Länge pro Block, um zugleich die Länge der spezifischen Boxen zu definieren,
und dadurch, daß die Anzahl aus diesen Zuteilungen hervorgehenden Bits und die besagten durchschnittlichen Längen an einen adressierbaren Speicher geführt werden, um sie zu lesen, einerseits gemäß dem besagten Neuverteilungsverfahren nach Weg und andererseits für jeden Weg nach Datenpaketen selber Natur, die Boxen selber Länge bilden gleich den jeweiligen durchschnittlichen Längen, wobei das besagte Neuverteilungsverfahren nach Weg und nach Paketen vorgesehen ist, um in jedes Paket mindestens das erste Bit bezüglich des betreffenden hierarchischen Datentyps und in den gegebenenfalls zusätzlich verbleibenden Platz die überschüssigen Bits eines oder anderer Blöcke zu bringen, für denselben Datentyp.

2. Gerät nach Anspruch 1, dadurch gekennzeichnet, daß die besagten Signale aus M = 3 Datentypen gebildet werden, zu übertragen in N = 2 verschiedenen Wegen HP und LP, d.h. jeweils hoher und geringer Priorität.

3. Gerät nach einem der Ansprüche 1 und 2, dadurch gekennzeichnet, daß in der Steuerschaltung zur Neuverteilung der Bits für den besagten Neuzuteilungsvorgang Rechenmittel vorgesehen sind für den Satz überschüssiger Bits, die die Reste eventueller Teilungen bilden, die für die Berechnungen der durchschnittlichen Längen nach Block und für jeden der Wege vorgenommen wurden, für gleichartige Berechnungen der durchschnittlichen Länge nach Block und nach Weg, und daß die besagten durchschnittlichen Längen wie die vorhergehenden an denselben adressierbaren Speicher geliefert werden.

4. Gerät nach einem der Ansprüche 1 bis 3, dadurch gekennzeichnet, daß die Kapazität des besagten adressierbaren Speichers mindestens gleich der des Bildes oder der Bildgruppe ist, in dem oder in der ein bestimmtes Verhältnis global respektiert werden muß.

5. Gerät nach einem der Ansprüche 1 bis 3, dadurch gekennzeichnet, daß die Kapazität des besagten adressierbaren Speichers mindestens gleich der eines Bildabschnitts ist und dadurch, daß für das aktuelle Bild oder die Bildgruppe die Zählungen der Anzahl Bits entsprechend jedem der Datentypen dieselben wie für das vorhergehende Bild oder die Bildgruppe sind, mit Ausnahme des ersten Bildes oder der ersten Bildgruppe, für das oder die die Wegzuteilungen für jeden der Abschnitte auf denselben Wert entsprechend dem besagten global bestimmten Verhältnis festgelegt sind.

6. Gerät zur Verarbeitung nach Übertragung von digitalen Signalen entsprechend einer anfänglichen Bildsequenz in Blöcken, wobei diese Blöcke selbst M Datentypen entsprechen, die nach einer bestimmten Hierarchie geordnet werden können und die, vor der besagten Übertragung, mindestens teilweise mit einer Kodierung variabler Länge kodiert wurden und nach dieser Kodierung folgender zeitweiliger Neuorganisationsverarbeitung unterzogen wurden :
(a) nach Bildabschnitten und nach einem global zu respektierenden Verhältnis in einem Bild oder einer Bildgruppe Zuteilung der Anzahl von einem zum anderen der N gesonderten prioritären Wege zu übertragenden Anzahl Bits;
(b) in jedem Weg und spezifisch für jeden Datentyp Neuverteilung dieser Bits nach Paketen selber Länge, gleich einer spezifische Boxlänge genannten Größe in Anzahl Bits über den Blocksatz des betreffenden Abschnitts mit der durchschnittlichen Länge pro Block der so zugeteilten Daten;
(c) Neuzuteilung in den freigelassenen Löchern in den Paketen, die für einen Block zu groß sind, der überschüssigen Bits eines oder anderer Blöcke, für den oder diese Blöcke dagegen nicht in diese besagten Paketen passen;
das besagte Verarbeitungsgerät ist dadurch gekennzeichnet, daß es enthält :
(1) eine Weichenschaltung für die besagten übertragenen Signale nach dieser zeitweiligen Neuzuteilung;
(2) parallel zu N Ausgängen der besagten Weichenschaltung N Datenspeicher entsprechend jeweils jedem der N Wege :
(3) einen Zwischenspeicher zum Ablegen der den besagten Löchern entsprechenden Bits;
(4) parallel zu jedem dieser (N+1) Speicher M Speicher nach Datentyp;
(5) am Ausgang jedes dieser M Speicher einen Schalter, vorgesehen zur abwechselnden Auswahl einer der M Ausgänge dieser M Speicher, um so den anfänglichen digitalen Signalfluß wiederherzustellen.

7. Gerät nach Anspruch 6, dadurch gekennzeichnet, daß die digitalen Signale drei Datentypen entsprechen und daß die gesonderten prioritären Wege entweder sogenannte HP-Wege hoher Priorität oder sogenannte LP-Wege geringer Priorität sind.

## Claims

1. A device for processing, in view of a transmission, digital signals corresponding to a sequence of images organized in blocks and first coded, at least in part, in accordance with a variable length coding method, said signals being constituted by types of data which can be arranged in accordance with a given hierarchy, which
(1) an addressable memory for storing the stream of bits available after said variable length coding;
(2) a counting circuit also receiving said bit stream with a view to the determination and storage of the number of bits corresponding in said stream to each type of data, and this for at least one image section, a section being defined as the whole sub-assembly of blocks which is preceded by a synchronizing signal;
(3) at the output of this counting circuit, a circuit for assigning to each of said sections and in accordance with a given proportion to be roughly taken into account in an image or in a group of images, the number of bits to be transmitted in N channels of different priorities, these N numbers of bits being referred to as allocations and corresponding to each channel, respectively;
(4) at the output of said circuits, a circuit for controlling the redistribution of bits of said stream for each of said sections, comprising, for the execution of the redistribution process, means for assigning to the channel corresponding to the highest priority, as a function of the corresponding value of the allocation and in the descending hierarchical order of the data, all those data which are entirely comprised therein, and for assigning to the corresponding channel corresponding to the lowest priority, as a function of the corresponding value of the allocation and in the ascending hierarchical order of the data, all those data which are entirely comprised therein, characterized in that the circuit for controlling the redistribution of bits also comprises:
(a) means for calculating, in numbers of bits and for the assembly of blocks of the section concerned, the average length per block of data thus assigned, for defining a specific unit length for each type of data, equal to said respective average length;
(b) for the types of data which cannot be exclusively assigned to the one or the other channel of the highest or the lowest priority, complementary means for assigning, to the HP channel, those data which are comprised therein by an equal distribution in the sections, and for subsequently assigning the remaining data to the channel(s) of lower priority;
(c) for this type of data which are not exclusively assigned but distributed between at least two channels, complementary means for similarly calculating the average length per block for also defining the lengths of the specific units, and in that the number of bits resulting from these assignments and said average lengths are applied to the addressable memory for the purpose of reading this memory in conformity with said process of redistribution per channel and, for each channel, per packet of data of the same nature constituting the units having a length equal to said respective average lengths, said process of redistribution per channel and per packet being provided for locating at least the first bits related to the relevant type of hierarchical data in each packet and, for the same type of data, the leftover bits of another block or the other blocks in the possible complementary location remaining available.

2. A device as claimed in Claim 1, characterized in that said signals are constituted by M = 3 types of data to be transmitted in N = 2 different channels HP and LP having a high and a low priority, respectively.

3. A device as claimed in any one of Claims 1 and 2, characterized in that in the circuit for controlling the redistribution of bits, for said redistribution process, the calculation means are provided for performing similar calculations of the average length per block and per channel for the assembly of leftover bits constituting the possible rests of the divisions realised for calculating the average lengths per block and for each channel, and in that said average lengths are applied, likewise as the previous lengths, to the addressable memory.

4. A device as claimed in any one of Claims 1 to 3, characterized in that the capacity of said addressable memory is at least equal to that of the image or the group of images in which a given proportion is to be globally taken into account.

5. A device as claimed in any one of Claims 1 to 3, characterized in that the capacity of said addressable memory is at least equal to that of an image section, and in that, for the image or the group of current images, the counts of the numbers of bits corresponding to each type of data are the same as for the image or the previous group of images, with the exception of the first image or the first group of images for which the allocations per channel are fixed for each section at the same value corresponding to said given global proportion.

6. A device for processing, after transmission, digital signals initially corresponding to a sequence of images organized in blocks, these blocks themselves corresponding to M types of data which can be arranged in accordance with a given hierarchy, and, before said transmission, being coded at least in part in accordance with a variable length coding method and subsequently being subjected after this coding to the following temporary reorganization:
(a) for each image section and in accordance with a given proportion to be globally taken into account in an image or a group of images, assigning the number of bits to be transmitted to the one or the other of the N channels of different priorities;
(b) in each channel and specifically for each type of data, redistributing these bits in packets having a length which is equal to a value referred to as specific unit length and equal, in number of bits and for the assembly of blocks of the section concerned, to the average length per block of data thus assigned;
(c) reassignment, in the gaps left available in those packets which are too extensive for a block, leftover bits of another block or other blocks which, in contrast, are not comprised in said packets for this block or these blocks;
said processing device being characterized in that it comprises:
(1) a circuit for switching said transmitted signals after this temporary reorganization;
(2) parallel to N outputs of said switching circuit, N data memories corresponding to each of the N channels, respectively;
(3) an intermediate memory for storing the bits corresponding to said gaps;
(4) parallel to each of these (N+1) memories, M memories for each type of data;
(5) at the output of each of these M memories, a switch for alternately selecting one of the M outputs of these M memories and thus constituting the initial stream of digital signals.

7. A device as claimed in Claim 6, characterized in that the digital signals correspond to three types of data, and in that the channels of distinct priorities are either a high-priority channel HP or a low-priority channel LP.
